# EUROPÄISCHE PATENTSCHRIFT

(11) **EP 1 233 194 B1**
(45) Veröffentlichungstag und Bekanntmachung des Hinweises auf die Patenterteilung: **14.04.2004**
(21) Anmeldenummer: 02405091.6
(22) Anmeldetag: 08.02.2002
(51) Int. Cl.: F16B 25/00

(54) **Betonschraube**
Screw for concrete
Vis pour beton

(30) Priorität: 19.02.2001 DE 10107801
(43) Veröffentlichungstag der Anmeldung: 21.08.2002
(73) Patentinhaber: HILTI Aktiengesellschaft, 9494 Schaan (LI)
(72) Erfinder: Forster, Hubert, 82272 Mooreweis (DE)
(74) Vertreter: Wildi, Roland

(56) Entgegenhaltungen:
- DE-A- 3 117 624
- DE-A- 19 856 512
- DE-U- 29 621 340
- DE-U- 29 812 526
- US-A- 3 124 408
- US-A1- 2002 016 594

## Beschreibung

Die Erfindung betrifft eine selbstfurchende Schraube, insbesondere Betonschraube, mit einem Schaft, dessen setzrichtungsseitiges Ende kegelförmig ausgebildet ist und am gegenüberliegenden Ende ein Drehmoment- und Lastangriffsmittel vorgesehen ist, und einem Gewinde mit einer zylinderförmigen Aussenkontur, wobei sich das Gewinde zumindest teilweise über die Länge des Schaftes erstreckt.

Selbstfurchende Schrauben der oben genannten Art sind seit langem bekannt und weisen einen Schaft auf, an dessen Mantelfläche zumindest teilweise ein Gewinde angeordnet ist, wobei die Gewindeflanken beispielsweise mit verschiedenen Aussparungen sowie mit verschiedenen Flankenwinkeln versehen sind. Derartige Schrauben werden direkt in einen Untergrund oder nach der Herstellung einer Bohrung in diesen eingedreht. Es ist bekannt, dass bei zunehmender Eindrehtiefe der Schraube ein immer größerer Kraftaufwand notwendig ist, um eine Befestigung herzustellen.

Aus der DE-U1-29812526 ist eine derartige selbstfurchende Schraube mit einem Schaft und einem, sich zumindest teilweise, über den Schaft erstreckenden Gewinde bekannt. Am setzrichtungsseitigen Ende ist der Schaft kegelförmig ausgebildet. Ferner weist das Gewinde eine zylinderförmige Aussenkontur auf.

Vorteilhaft an dieser bekannten Lösung ist, dass die Schraube unabhängig von einer Bohrlochqualität hohe Auszugskräfte aufweist.

Nachteilig an der bekannten Lösung ist, dass beim Eindrehen der Schraube mit zunehmender Eindrehtiefe der Schraube ein immer grösseres Eindrehmoment benötigt wird. Der Anstieg des Eindrehmoments führt einerseits zu einem unzulänglichen Eindrehverhalten und andererseits kann, je nach Untergrund, beispielsweise ein Bruch der Schraube auftreten.

Ferner ist eine Demontage der Befestigung, insbesondere der Schraube, stark erschwert, da das Lösedrehmoment je nach den Umweltbedingungen um einiges höher als das Eindrehmoment ist.

Aus der DE 296 21 340 U1 ist eine Schraube zum Befestigen von Bauteilen an einem Unter-bau aus Holz oder Holzwerkstoffen bekannt. Diese weist einen Kopf, einen Schaft und eine Eindringspitze auf. Am Schaft sind zwei Gewindeabschnitte ausgebildet. Der erste von der Eindringspitze ausgehende Gewindeabschnitt weist einen Gewindegang mit schneidenartiger äusserer Begrenzung auf, während der nachfolgende zweite Gewindeabschnitt eine stumpfe äussere Begrenzung aufweist. Beide Gewindegänge umfassen dabei eine Mehrzahl von Windungen.

Der vorliegenden Erfindung liegt die Aufgabe zugrunde, eine selbstfurchende Schraube zu schaffen, deren Eindreh- und Löseverhalten gleichbleibend komfortabel ist. Ferner soll die Herstellung der Schraube wirtschaftlich sein.

Erfindungsgemäss wird die Aufgabe dadurch gelöst, dass das Vorgewinde den Schaft mit einer Erstreckung von 90° bis 270° umgreift. Dadurch, dass sich das Vorgewinde um jeweils 90° bis 270° am Aussenumfang der Schraube erstreckt, ist das Eindrehverhalten sowie das Ausdrehverhalten für Untergründe mit einer äusserst hohen bis hin zu einer niedrigen Härte optimal. Ein Nachgewinde kann ebenfalls den Schaft mit einer Erstreckung von 90° bis 270° umgreifen.

Dadurch, dass am setzrichtungsseitigen Ende ein Vorgewinde angeordnet ist, dessen Flankenbreiten in Setzrichtung abnehmend ausgebildet sind, dringt das Vorgewinde wie ein Meissel in einen Untergrund, insbesondere Beton, ein. Nach dem Übergang des Vorgewindes zum Gewinde weisen beide Gewindearten eine identische Flankenbreite auf. Das eigentliche Gewinde greift somit in den, vom Vorgewinde gefurchten, Gewindegang. Selbstverständlich kann die Schraube auch mehrere Gewindegänge aufweisen. Vorteilhafterweise weist in diesem Fall jeder der Gewindegänge ein Vorgewinde auf.

Vorzugsweise schliesst sich an das setzrichtungsseitig abgewandte Ende des Gewindes ein Nachgewinde an, das eine entgegen der Setzrichtung abnehmende Flankenbreite aufweist. Das Nachgewinde verbessert ein problemloses Lösen der Schraube aus dem Untergrund, insbesondere dem Bohrloch.

Das Vorgewinde und das Nachgewinde umgreifen vorteilhafterweise den Schaft jeweils um etwa 180°. Dadurch, dass sich das Vor- und das Nachgewinde um jeweils den halben Aussenumfang der Schraube erstrecken, ist das Eindrehverhalten sowie das Ausdrehverhalten optimal.

In einer bevorzugten Ausführungsform weist das Vorgewinde einen in Setzrichtung abnehmenden Aussendurchmesser auf, um ein Einschrauben in den Untergrund zu erleichtern.

Vorzugsweise entspricht der Aussendurchmesser des Gewindes dem 1,3- bis 1,6-fachen des Kerndurchmessers des Schaftes, um hohe Lastwerte und gutes Eindrehverhalten zu erzielen.

In einer bevorzugten Ausführungsform entspricht die Flankenbreite des Gewindes etwa dem 0,075- bis 0,125-fachen des Kerndurchmessers des Schaftes, um die Flankenbreite optimal auf die Ausbildung der übrigen Schraube abzustimmen.

Vorteilhafterweise ist das kegelförmig ausgebildete Ende des Schaftes gewindefrei, um eine wirtschaftliche Herstellung sicherzustellen.

Die Erfindung wird nachstehend anhand eines Ausführungsbeispieles näher erläutert. Es zeigen:
- Fig. 1: eine Seitenansicht der Schraube;
- Fig. 2: eine vergrössserte Seitenansicht des setzrichtungsseitigen Endes, der in Fig. 1 dargestellten Schraube.

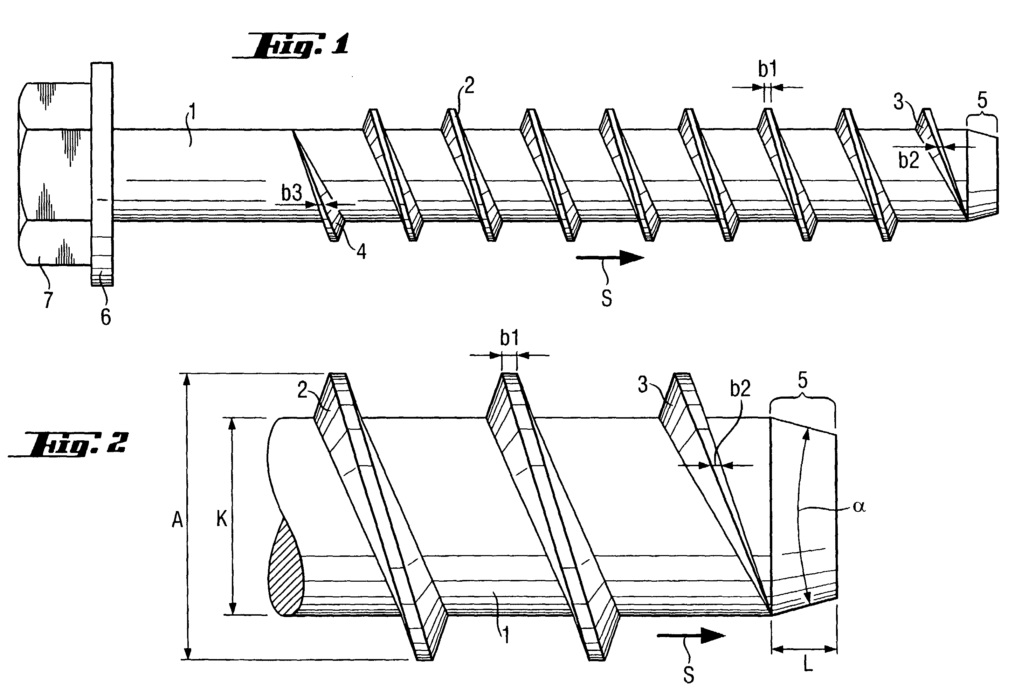

In den Fig. 1 und 2 ist eine erfindungsgemässe Schraube, insbesondere eine Betonschraube, mit einem Schaft 1, der am setzrichtungsseitigen Ende kegelförmig ausgebildet ist und an dessen gegenüberliegenden Ende ein Drehmoment- und Lastangriffsmittel vorgesehen ist, dargestellt.

Am Schaft 1 ist zwischen dem Lastangriffsmittel und dem kegelförmig ausgebildeten Bereich 5 ein zylinderförmiges Gewinde 2 angeordnet. Die Flankenbreite b1 des Gewindes 2 erstreckt sich achsenparallel zum Schaft 1. Am setzrichtungsseitigen Ende des Gewindes 2 ist ein Vorgewinde 3 angeordnet, dessen Flankenbreite b2 in Setzrichtung S abnehmend ausgebildet ist. Entgegen der Setzrichtung S schliesst an das Gewinde 2 ein Nachgewinde 4 an, dessen Flankenbreite b3 entgegen der Setzrichtung S abnimmt. Die Gewindehöhe des Vorgewindes 3 und des Nachgewindes 4 reduziert sich in dieselbe Richtung wie die jeweils korrespondierende Flankenbreite b2, b3 abnimmt. Das Vorgewinde 3 und das Nachgewinde 4 erstrecken sich jeweils über den halben Umfang des Schaftes 1, also um 180°.

Der kegelförmig, insbesondere kegelstumpfförmig ausgebildete Bereich 5 des Schaftes 1 weist einen Basiswinkel α von etwa 30° auf und verjüngt sich in Setzrichtung S. Die Längserstreckung L dieses gewindefreien Bereichs entspricht etwa dem 0,5-fachen des Kerndurchmessers K des Schaftes 1.

Das Lastangriffsmittel wird beispielsweise durch eine Unterlegscheibe 6 und die Drehmomentangriffsmittel durch einen Mehrkantkopf 7 gebildet. Sowohl die Unterlegscheibe 6 als auch der Mehrkantkopf 7 sind einteilig mit dem Schaft 1 ausgebildet.

Der Aussendurchmesser A des Gewindes 2 entspricht dem 1,5-fachen des Kerndurchmessers K des Schaftes 1 und die Flankenbreite b1 des Gewindes 2 etwa dem 0,1-fachen des Kerndurchmessers K des Schaftes 1.

## Patentansprüche

1. Selbstfurchende Schraube, insbesondere Betonschraube, mit einem Schaft (1), dessen setzrichtungsseitiges Ende kegelförmig ausgebildet ist und am gegenüberliegenden Ende ein Drehmoment- und Lastangriffsmittel vorgesehen ist, und einem Gewinde (2) mit einer zylinderförmigen Aussenkontur, wobei sich das Gewinde (2) zumindest teilweise über die Länge des Schaftes (1) erstreckt und wobei sich an das setzrichtungsseitige Ende des Gewindes (2) ein Vorgewinde (3) anschliesst, das eine in Setzrichtung (S) abnehmende Flankenbreite (b2) aufweist, **dadurch gekennzeichnet, dass** das Vorgewinde den Schaft mit einer Erstreckung von 90° bis 270° umgreift.

2. Schraube nach Anspruch 1, **dadurch gekennzeichnet, dass** sich an das setzrichtungsseitig abgewandte Ende des Gewindes (2) ein Nachgewinde (4) anschliesst, das eine entgegen der Setzrichtung (S) abnehmende Flankenbreite (b3) aufweist.

3. Schraube nach Anspruch 1 oder 2, **dadurch gekennzeichnet, dass** das Vorgewinde (3) und das Nachgewinde (4) den Schaft (1) jeweils um etwa 180° umgreifen.

4. Schraube nach einem der Ansprüche 1 bis 3, **dadurch gekennzeichnet, dass** das Vorgewinde (3) einen in Setzrichtung (S) abnehmenden Aussendurchmesser aufweist.

5. Schraube nach einem der Ansprüche 1 bis 4, **dadurch gekennzeichnet, dass** der Aussendurchmesser (A) des Gewindes (2) dem 1,3- bis 1,6-fachen des Kerndurchmessers (K) des Schaftes (1) entspricht.

6. Schraube nach einem der Ansprüche 1 bis 5, **dadurch gekennzeichnet, dass** die Flankenbreite (b1) des Gewindes (2) etwa dem 0,075- bis 0,125-fachen des Kerndurchmessers (K) des Schaftes (1) entspricht.

7. Schraube nach einem der Ansprüche 1 bis 7, **dadurch gekennzeichnet, dass** das kegelförmig ausgebildete Ende (5) des Schaftes gewindefrei ist.

## Claims

1. Self-tapping screw, in particular a concrete screw, comprising a shaft (1) the end of which at the setting side is of conical design, and on the opposite end is provided a rotary torque and load-engaging means, and a thread (2) with a cylindrical outside contour, and the thread (2) extends at least partially over the length of the shaft (1), and adjacent to the end of the thread (2) at the setting side is a pre-thread (3) with a flank width (b2) which reduces in the setting direction (S), **characterised in that** the pre-thread reaches around the shaft to an extent of between 90° and 270°.

2. Screw according to Claim 1, **characterised in that** adjacent to the end of the thread (2) at the side facing away from the setting side is a post-thread (4) with a flank width (b) which reduces against the setting direction (S).

3. Screw according to Claim 1 or 2, **characterised in that** the pre-thread (3) and the post-thread (4) reach around the shaft (1) by approximately 180° respectively.

4. Screw according to one of Claims 1 to 3, **characterised in that** the pre-thread (3) has an outside diameter which reduces in the setting direction (S).

5. Screw according to one of Claims 1 to 4, **characterised in that** the outside diameter (A) of the thread (2) equals between 1.3 to 1.6 times the core diameter (K) of the shaft (1).

6. Screw according to one of Claims 1 to 5, **characterised in that** the flank width (b1) of the thread (2) equals approximately between 0.075 and 0.125 times the core diameter (K) of the shaft (1).

7. Screw according to one of Claims 1 to 7, **characterised in that** the conical end (5) of the shaft is not threaded.

## Revendications

1. Vis autotaraudeuse, en particulier vis à béton, avec une tige (1) dont l'extrémité côté direction de scellement est conformée en cône et qui comporte, à l'extrémité opposée, un moyen d'application de couple et de charge, et avec un filetage (2) avec un contour extérieur cylindrique, le filetage (2) s'étendant au moins partiellement sur la longueur de la tige (1), et dans laquelle, à l'extrémité côté direction de scellement du filetage (2) se raccorde un avant-filetage (3) qui présente une largeur de flanc (b2) décroissant dans la direction de scellement (S), **caractérisée en ce que** l'avant-filetage entoure la tige avec une extension de 90° à 270°.

2. Vis selon la revendication 1, **caractérisée en ce qu'**un post-filetage (4) qui présente une largeur de flanc (b3) décroissant à l'opposé de la direction de scellement (S) se raccorde à l'extrémité du filetage (2) située à l'opposé du côté direction d'enfoncement.

3. Vis selon la revendication 1 ou 2, **caractérisée en ce que** l'avant-filetage (3) et le post-filetage (4) entourent chacun la tige (1) sur environ 180°.

4. Vis selon une des revendications 1 à 3, **caractérisée en ce que** l'avant-filetage (3) présente un diamètre extérieur décroissant dans la direction de scellement (S).

5. Vis selon une des revendications 1 à 4, **caractérisée en ce que** le diamètre extérieur (A) du filetage (2) correspond à 1,3 à 1,6 fois le diamètre de noyau (K) de la tige (1).

6. Vis selon une des revendications 1 à 5, **caractérisée en ce que** la largeur de flanc (b1) du filetage (2) correspond environ à 0,075 à 0,125 fois le diamètre de noyau (K) de la tige (1).

7. Vis selon une des revendications 1 à 7, **caractérisée en ce que** l'extrémité de conformation conique (5) de la tige est exempte de filetage.
